Europäisches Patentamt

European Patent Office

Office européen des brevets

(11) Numéro de publication: **0 280 585**
**A1**

## (12) DEMANDE DE BREVET EUROPEEN

(21) Numéro de dépôt: 88400085.2

(22) Date de dépôt: 18.01.88

(51) Int. Cl.⁴: **B 01 D 53/34**
**B 01 D 53/02**

(30) Priorité: 28.01.87 FR 8700986

(43) Date de publication de la demande:
**31.08.88 Bulletin 88/35**

(84) Etats contractants désignés:
**BE CH DE ES FR GB IT LI NL SE**

(71) Demandeur: **L'AIR LIQUIDE, SOCIETE ANONYME POUR L'ETUDE ET L'EXPLOITATION DES PROCEDES GEORGES CLAUDE**
**75, Quai d'Orsay**
**F-75321 Paris Cédex 07 (FR)**

(72) Inventeur: **Delobel, Olivier**
**180, rue Lecourbe**
**F-75015 Paris (FR)**

**Louise, Jean**
**20, allée des Plantes**
**F-94800 Villejuif (FR)**

**Fukuoka, Shin-Ichi**
**2-25, Yamate-cho**
**Higashi-Osaka-shi Osaka Pref. (JP)**

**Fujimura, Kohei**
**4-8, Nishi-Ikuta 4-chome Miyamae-ku**
**Kawasaki-shi Kanagawa Pref. (JP)**

**Larquet, Christian**
**55, rue Benoit Frachon**
**F-78280 Guyancourt (FR)**

**Recourt, Patrick**
**8, allée Louise Bruneau**
**F-91120 Palaiseau (FR)**

(74) Mandataire: **Bouton Neuvy, Liliane et al**
**L'Air liquide, Société Anonyme pour L'Etude et L'Exploitation des Procédés Georges Claude 75, Quai d'Orsay**
**F-75321 Paris Cédex 07 (FR)**

Le titre de l'invention a été modifié (Directives relatives à l'examen pratiqué à l'OEB, A-III, 7.3)

(54) **Procédé et installation d'élimination des hydrures de silicium contenus dans un effluent gazeux.**

(57) La présente invention concerne l'élimination des hydrures de silicium.

Selon ce procédé, les hydrures de silicium contenus dans un effluent gazeux sont éliminés par passage du dit effluent dans une zone d'adsorption contenant un adsorbant alcalin solide de granulométrie contrôlée au moins égale à 0,2 millimètre tout en respectant la relation suivante D zone d'adsorption/ d adsorbant supérieure à 15 ; l'installation de traitement contenant une pluralité de colonnes d'adsorption (8) (12) garnies du dit adsorbant.

Application du procédé et de l'installation au traitement des hydrures de silicium, dont le monosilane, le disilane et les polysilanes.

Fig.1

EP 0 280 585 A1

**Description**

"PROCEDE D'ELIMINATION DES HYDRURES DE SILICIUM CONTENUS DANS UN EFFLUENT GAZEUX, ET INSTALLATION DE TRAITEMENT"

La présente invention concerne l'élimination des hydrures de silicium et une installation de traitement des effluents industriels les contenant.

Le silicium est mis en oeuvre dans l'industrie des semi-conducteurs comme principale matière première, notamment sous forme d'hydrures de silicium dont les trois produits majeurs sont représentés par le monosilane $SiH_4$, le disilane $Si_2H_6$ et les polysilanes $Si_nH_{2n+2}$ $n \geqq 3$.

Dans de très nombreuses techniques on constate une utilisation croissante de ces hydrures gazeux, notamment du silane. Or, l'on sait que ces hydrures gazeux sont extrèmement dangereux par leur toxicité et leur tendance à l'inflammabilité.

La concentration maximale admissible (C.M.A.) du silane dans une atmosphère de travail pour une exposition de huit heures par jour et cinq jours par semaine est de 0,5 ppm volume. De plus, cet hydrure présente la particularité d'être spontanément inflammable dans l'air.

Il est donc indispensable de détruire les hydrures de silicium en traitant les effluents à base de silanes issus de l'industrie électronique et connexe. Ces effluents sont nocifs et il est souhaitable de disposer d'un procédé et d'un appareillage permettant de les éliminer en toute sécurité et avec un bon rendement.

Dans la technique classique, les hydrures inorganiques volatils tels que le silane sont éliminés par un laveur dans lequel l'hydrure est mis en contact avec une solution alcaline aqueuse telle qu'une solution de soude caustique, ou bien par un appareil d'oxydation (combustion).

Actuellement, le brûlage constitue la meilleure façon d'éliminer ces hydrures. Néanmoins, et devant la réticence des industriels vis à vis d'une méthode utilisant une flamme, des études visant à détruire les silanes par adsorption sur un support solide ont été développées. Car les traitements par absorption par voie humide du gaz effluent pollué à contre-courant d'une solution de soude caustique, ne peuvent être retenus en raison de la taille importante des installations nécessaires pour obtenir une capacité d'absorption suffisante. De plus, le traitement en grande quantité de la solution alcaline après absorption des silanes provoque également des difficultés et inconvénients. Et,il a été envisagé le passage du gaz à traiter à travers un lit d'un silicate inorganique de grande porosité, telle que la terre de diatomées, le dit silicate étant imprégné par une solution aqueuse alcaline et éventuellement par une solution oxydante.

Toutefois, ces procédés posent invariablement des problèmes sous les aspects du rendement d'élimination et de l'opération de traitement. Dans le cas du traitement du silane gazeux par un laveur alcalin, par exemple, la majeure partie du silane reste on décomposée et est au contraire rejetée dans l'atmosphère ambiante pour être oxydée par contact avec l'air. Ceci ne constitue pas un procédé efficace puisque, en substance, le laveur est incapable d'éliminer le silane. Le traitement par combustion ne peut pas être qualifié de procédé acceptable du point de vue de la sécurité puisqu'une erreur de manipulation du gaz à traiter peut entraîner une explosion dans le cas où le gaz contient différents types de gaz. En ce qui concerne l'adsorbant, le pourcentage de l'humidité contenue dans le support solide constitue un facteur important. Le support solide est utilisé pour promouvoir·le contact avec le gaz, et la terre de diatomées, par exemple, comprend des grains fins, ayant une grosseur de grain non supérieure à quelques microns. Peu après l'imprégnation par une solution alcaline aqueuse, la terre de diatomées possède une haute densité apparente en raison de sa haute teneur en humidité mais elle se dessèche progressivement par contact avec le gaz sec. Sous cet effet, la densité apparente du support ou de la terre de diatomées décroît et le gel remonte à la surface, au détriment de la capacité d'adsorption. Inversement, si le support est imprégné dans une mesure excessive, ceci se traduit par un accroissement de la contre-pression au passage du gaz à traiter, ce qui est préjudiciable à l'obtenation d'une élimination totale. Il est donc nécessaire de maintenir constamment la bonne teneur en humidité, ce qui est extrêmement délicat.

Etant donné l'essor pris par l'industrie des semi-conducteurs d'une part, l'évolution des législations concernant la protection de l'environnement et des travailleurs d'autre part, il a été recherché une technique simple et peu onéreuse permettant une parfaite élimination des silanes par adsorption sur support solide alcalin.

Il a été constaté que l'élimination des silanes pouvait être avantageusement réalisée dans une zone d'adsorption sur différents types d'adsorbants alcalins solides, mais il a été trouvé que leur efficacité est en relation avec leur granulométrie, qui doit être contrôlée et au moins égale à 0,2 millimètre.

La granulométrie de l'adsorbant influence notablement les performances d'adsorption de celui-ci vis à vis des hydrures de silicium; mais il a également été observé qu'il doit être tenu compte du diamètre de la zone d'adsorption et que pour obtenir les meilleurs taux d'élimination des hydrures de silicium, le rapport entre le diamètre de la zone d'adsorption et le diamètre de l'adsorbant doit être supérieur à 15 :

D zone adsorption > 15

d adsorbant

L'adsorbant solide de granulométrie déterminée peut être la chaux sodée, produit très facilement disponible sur le marché et dont le prix de revient est très bas.

L'adsorbant solide de granulométrie déterminée peut aussi être obtenu à partir d'un support de pierre ponce imprégnée d'une solution de soude et de permanganate de potassium. Par exemple des adsorbants constitués par 70-80% de pierre ponce, 2,45-2,75 % de NaOH, 1,2 à 1,4 % de $KMnO_4$ et le complément à 100 par $H_2O$.

On peut remplacer le permanganate par un mélange d'oxydes de cuivre, de manganèse et de cobalt. Ces métaux sont fixés à l'état de chlorure ($CuCl_2$, $CoCl_2$, $MnCl_2$) sur le support, puis oxydés dans une étuve sous balayage d'air. L'oxydation peut être avantageusement conduite vers 400°C. Par exemple on peut soumettre à l'oxydation un solide constitué par 70 à 80 % de pierre ponce et 20 à 30 % d'une solution contentant les chlorures des métaux cités.

La densité de l'adsorbant solide est avantageusement comprise entre 0,75 et 0,95 kg /litre.

Le procédé est mis en oeuvre par passage du gaz effluent pollué par des silanes à travers une charge d'adsorbant solide de granulométrie contrôlée, le dit gaz est introduit à la température ambiante sous la pression atmosphérique, le débit du gaz contenant l'hydrure de silicium est avantageusement compris entre 0,6 et 1,3 litre par minute.

La présente invention a également pour objet une installation de traitement des gaz par adsorption exempte des inconvénience précités. Cette installation comprend und pluralité de colonnes d'adsorption garnies d'une substance granulaire alcaline, des conduites d'amenée du gaz à traiter dans les colonnes d'adsorption, des conduites d'amenée de gaz inerte, des moyens connectés aux conduites d'amenée de gaz inerte, des moyens, d'humidification du mélange de gaz à traiter et de gaz inerte permettant au dit mélange d'atteindre une teneur en humidité prédéterminée, des colonnes d'évacuation du gaz traité et des vannes de commande montées sur les conduites.

Dans cette installation, le gaz à traiter est humidifié par les moyens humidificateurs de manière à présenter un pourcentage d'humidité prédéterminé et il est introduit dans l'une des colonnes d'adsorption à travers les vannes de commande. Si, par exemple, le gaz à traiter est un gaz contenant du silane, il se produit la transformtion suivante : $SiH_4 + 2NaOH + H_2O \rightarrow NaSiO_3 + 4H_2$ De cette façon, le silane se transforme en $Na_2SiO_3$ dépourvu de nocivité et qu'on peut éliminer.

L'humidification du gaz à traiter est destinée à permettre au gaz de présenter à tout moment l'humidité voulue, afin d'éviter que l'adsorbant ne se dessèche. Le degré d'humidification du gaz à traiter peut être détecté par une différence de pression entre l'entrée et la sortie de l'humidificateur. En d'autres termes, un accroissement de l'humidification augmente la perte de charge dans l'adsorbeur et, de cette façon, on ajuste le degré d'humidification en utilisant une perte de charge avant d'utiliser ce degré comme référence. Plus précisément, on prévoit une conduite de dérivation pour contourner l'humidificateur et permettre de régler la quantité de gaz à faire passer à travers l'humidificateur et la quantité de gaz qu'on ne doit pas faire passer à travers cet appareil.

On mélange éventuellement le gaz à traiter à un gaz inerte, normalement de l'azote gazeux, pour augmenter la sécurité par dilution et pour accroître sa vitesse d'écoulement grâce à l'accroissement du volume puisque, en général, le gaz à traiter a un petit volume, qui est gênant lorsqu'il s'agit de faire passer ce gaz à travers les colonnes d'adsorption.

Les colonnes d'adsorption sont au moins partiellement formées d'une matière transparente, de sorte que l'adsorbant qu'elles contiennent peut alors être observé visuellement de l'extérieur, l'adsorbant se détériore et subit une variation de couleur au fur et à mesure que le gaz à traiter passe dans les colonnes d'adsorption et que les composants gazeux susvisés en sont éliminés, et la matière transparente permet d'observer facilement les modifications de l'extérieur, ce qui permet de remplacer l'adsorbant à des instants appropriés. Lorsqu'on utilise de la chaux sodée, sa coloration vire du blanc au violet brunâtre lorsqu'elle se détériore.

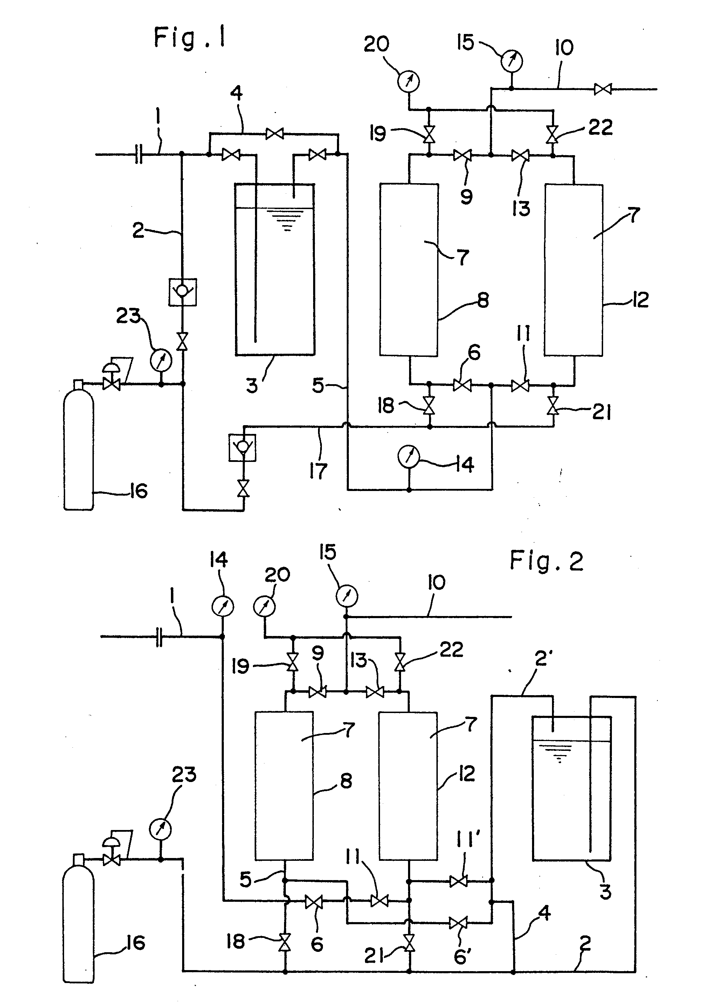

Les figures 1 et 2 annexées donnent une description des formes préférées de réalisation.

La figure 1 est un dessin schématique d'une première forme de réalisation de la présente invention ; et

la figure 2 est une vue schématique d'une deuxième forme de réalisation de l'invention.

La figure 1 montre une première forme de réalisation dans laquelle un gaz à traiter est humidifié directement. Un gaz contenant lui-même un gaz ou des gaz qu'il s'agit d'éliminer est introduit par une conduite 1 et se réunit à de l'azote gazeux acheminé par une conduite 2. Le courant confluent résultant est introduit dans un humidificateur 3 qui contient de l'eau. Une conduite 4 est une conduite de dérivation utilisée, ainsi qu'on l'a mentionné plus haut, pour régler l'humidification du gaz à traiter. Le mélange humidifié de gaz à traiter et d'azote est introduit par une conduite 5 et par une vanne de commande 6 dans l'une des colonnes d'adsorption 8 garnies de chaux sodée, dans laquelle le gaz à éliminer, tel qu'un silane ou diborane, est éliminé du mélange gazeux. Le mélange gazuex traverse ensuite une vanne de commande 9 et passe dans une conduite 10 pour être rejeté dans l'atmosphère ambiante. Lorsque la chaux sodée ou l'adsorbant contenu dans la colonne d'adsorption 8 s'est détérioré, on ferme les vannes de commande 6 et 9 et on ouvre les vannes de commande 11 et 13 pour introduire le gaz à traiter dans l'autre colonne d'adsorption 12.

La conduite 5 est munie d'un manomètre 14 et la conduite 10 est munie d'un manomètre 15 servant à mesurer la différence de pression entre l'entrée et la sortie de la colonne d'adsorption 8 ou 12 pour ajuster l'humidification du gaz ainsi qu'on l'a indiqué plus haut.Pour changer l'adsorbant ou la chaux sodée contenu dans la colonne d'adsorption, on introduit de l'azote gazeux, fourni par une bouteille d'azote gazeux 16, par une conduite 17 et une vanne de commande 18, dans la colonne d'adsorption (par exemple dans la colonne 8) pour balayer son volume intérieur et ce gaz est évacué à travers la vanne de commande 9 et la conduite 10. Ensuite, on ferme la vanne de commande 9 et on ouvre une vanne de commande 19 et on introduit une nouvelle quantité d'azote gazeux dans la colonne d'adsorption 8 pour accroître la pression intérieure et effectuer sur cette colonne une épreuve d'étanchéité à l'air. A cet effet, il est prévu un manomètre 20. La référence 23 désigne un manomètre à contact qui déclenche une alarme lorsque le gaz contenu dans la bouteille d'azote 16 est épuisé et que sa pression est tombée-au-dessous de sa valeur nécessaire pour l'exécution de l'épreuve d'étanchéité à l'air, de sorte que la bouteille 16 peut alors être remplacée par une bouteille neuve.

La figure 2 montre une forme de réalisation dans laquelle, au lieu d'humidifier directement le gaz à traiter, on humidife l'azote gazeux qu'il s'agit de mélanger au gaz à traiter. A tous autres égards, cette forme de réalisation est identique à celle de la figure 1 et on peut donc se dispenser d'en donner une explication.

Il est donné ci-après des exemples qui illustrent l'invention à titre non limitatif.

Exemple 1:

Une colonne d'adsorption cylindrique, formée de chlorure de polyvinyle PVC et ayant un diamètre intérieur de 26 mm et une hauteur de 300 mm, a été remplie de 150 g de chaux sodée granulaire possédant une grosseur de grain non supérieur à 0,2 mm. On a fait passer à travers cette colonne un gaz contenant 30 % de gaz silane et 70 % d'azote à un débit de 200 cm³/mn. L'analyse du gaz après traversée de la colonne ne détecte pas de gaz silane. On continue à introduire du gaz et il a fallu que la quantité de gaz silane introduite soit de 23,1 litres par kg de chaux sodée, pour qu'on détecte 25 ppm de silane à la sortie de la colonne d'adsorption. Comparativement à une installation utilisant un adsorbant contenant de la terre de diatomées imprégnée d'une solution aqueuse alcaline, on a observé que l'installation selon l'invention réalisant une élimination supérieure de 1,5 fois par litre de capacité de garnissage.

La grosseur de grain de la base granulaire a une grande influence sur le taux d'élimination. Les détails sont illustrés par le tableau I suivant (le gaz à traiter est le même que ci-dessous) :

TABLEAU I

| Adsorbant | Grosseur de grain (mm) | Densité kg/l | Débit du gaz (l/mn) | Taux d'élimination (l/kg) | taux d'élimination. (l/l) |
|---|---|---|---|---|---|
| Chaux sodée | 2 à 6 | 0,8 | 0,6 | 10 | 12,5 |
| – id – | 0,8 à 2 | 0,88 | 0,6 | 15 | 17,8 |
| – id – | 0,2 à 0,8 | 0,93 | 0,6 | 22 | 23,6 |
| – id – | 0,2 | 0,95 | 0,6 | 23 | 24,2 |
| Terre de diatomées + NaOH (*) | —— | 0,62 | 0,6 | 26 | 16,1 |

* 100 g de terre de diatomées imprégnée de 150 g d'une solution aqueuse contenant 10 % de NaOH.

Il ressort de ce qui précède, que l'installation selon la présente invention est capable de traiter le gaz sus visé avec un grand rendement én dépit de la faible capacité de la colonne d'adsorption. En outre, l'installation peut être mise en oeuvre sans danger et facilement et elle présente d'importants avantages comparativement aux installations de la technique antérieure.

Exemple 2

Selon la technique mise en oeuvre dans l'exemple 1, on conduit à la pression atmosphérique et à la température ambiante trois types d'essai sur les adsorbants solides suivants : essai 1 chaux sodée ; essai 2 pierre ponce + soude + permanganate de potassium ; essai 3 pierre ponce + NaOH + oxyde de cuivre + manganèse + cobalt.

L'adsorbant de l'essai 2 est obtenu par imprégnation d'une solution contenant 10 % NaOH, 5 % KMnO₄, 85 % H₂O, de manière à obtenir la composition finale suivante : pierre ponce : 74 % - NaOH : 2,6%-KMnO₄ : 1,3% - H₂O : 22,1 %.

L'adsorbant de l'essai 3 est obtenu en faisant absorber à de la pierre ponce de granulomètrie entre 0,2 et 0,8 millimètre, une solution aqueuse contenant 3,4 % MnCl₂, 4 H₂O + 3,16 CuCl₂ 2 H₂O + 0,22 % CoCl₂ 6 H₂O. Le solide constitué par 75,5 % de pierre ponce + 24,5 % de la solution susvisée est placé au four sous balayage d'air de de débit 10 l/heure,pendant une heure à 100°C, en vue de son séchage, puis 1 heure à 400°C afin d'effecteur un grillage et d'oxyder les chlorures pour obtenir MnO₂, CuO, Co₂O₃.

Après refroidissement à l'air, le solide est imprégné d'une solution de soude dans l'eau de telle manière que la teneur en NaOH soit environ de 5 %.

La température enregistrée est la température constatée pratiquement instantanément lors de l'arrivée du front de réaction sur le thermocouple installé. Cette température peut être utilisée comme indicateur de saturation de la cartouche, tout comme le permanganate de potassium, dont la couleur évolue du violet au vert puis au marron, lors de sa réduction et passage et l'état d'oxydation VII, à l'état V, puis III.

Les résultats obentus sont consignés dands le tableau II suivant.

TABLEAU II

| Adsorbant | Grosseur du grain (mm) | Densité kg/l | Débit du gaz (l/mn) | Taux d'élimination l/kg solide | Température °C |
|---|---|---|---|---|---|
| 1 | 0,2 à 0,8 | 0,93 | 0,6 | 22 | 88 |
| 2 | 0,2 | 0,8 | 1,3 | 16 | 50 |
| 3 | 0,2 à 0,8 | 0,75 | 0,6 | 18 | 91 |

Le taux d'élimination l/kg correspond au nombre de litres de silane détruit par kilogramme d'adsorbant solide.

**Revendications**

1. Procédé d'élimination des hydrures de silicium contenus dans un effluent gazeux par passage du dit effluent sur un absorbant solide, alcalin, caractérisé en ce que les hydrures de silicium sont éliminés par passage du dit effluent dans une zone d'adsorption contenant un adsorbant solide de granulomètrie contrôlée au moins égale à 0,2 millimètre, choisie de manière telle que le rapport entré le diamètre de la zone d'adsorption et le diamètre de l'adsorbant soit supérieur à 15.

2. Procédé d'élimination des hydrures de silicium selon la revendication 1, caractérisé en ce que l'adsorbent solide est la chaux sodée.

3. Procédé d'élimination des hydrures de silicium selon la revendication 1, caractérisé en ce que l'adsorbant solide est constitué par un support de pierre ponce imprégnée d'une solution de soude et de permanganate de potassium.

4. Procédé d'élimination des hydrures de silicium selon la revendication 1, caractérisé en ce que l'adsorbant solide est constitué par un support de pierre ponce sur lequel est fixé un mélange d'oxydes de cuivre, cobalt, manganèse, imprégnée de soude.

5. Procédé d'élimination des hydrures de silicium selon l'une des revendications 1 à 4, caractérisé par le passage d'un effluent gazeux contenant des hydrures de silicium à travers une charge d'adsorbant solide de granulomètrie contrôlée, le dit effluent étant introduit à la température ambiante et sous la pression atmosphérique, à un débit compris entre 0,6 et 1,3 litre par minute.

6. Installation de traitement de gaz par adsorption, destinée à épurer un gaz contenant des hydrures de silicium selon une quelconque des revendications 1 à 4, caractérisé en ce qu'elle comprend une pluralité de colonnes d'adsorption (8), (12) garnies d'une substance granulaire alcaline, des conduites d'amenés du gaz à traiter (1), (5) dans les colonnes d'adsorption, des conduites d'amenée de gaz inerte (2) des moyens connectés aux conduites d'amenée de gaz inerte, des moyens d'humidification (3) du mélange de gaz à traiter et de gaz inerte permettant au dit mélange d'atteindre une teneur en humidité prédéterminée, des conduites d'évacuation du gaz traité (10) et des vannes de commande montées sur les conduites (6), (9), (11), (13).

7. Installation selon la revendication 6, caractérisé en ce que les moyens d'humidification (3) sont intercalés sur la conduite du gaz à traiter (1).

8. Installation selon la revendication 7, caractérisée en ce que les moyens d'humidification (3) sont intercalés sur la conduite d'amenée du gaz inerte (2).

9. Installation selon la revendication 7, caractérisée en ce que la conduite d'amenée du gaz à traiter comprend une conduite de dérivation (4) contournant les moyens d'humidification (3).

10. Installtion selon la revendication 8, caractérisée en ce que la conduite d'amenée de gaz inerte (2) comprend une conduite de dérivation (4) contournant les moyens d'humidification (3).

Fig.1

Fig.2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | US-A-4 535 072  (M. KITAYAMA)<br>* En entier *<br>--- | 1,3,6 | B 01 D  53/34<br>B 01 D  53/02 |
| A | EP-A-0 194 366  (JAPAN PIONICS LTD)<br>--- | | |
| A | DE-A-2 942 383  (SIEMENS AG)<br>----- | | |

DOMAINES TECHNIQUES RECHERCHES (Int. Cl.4)

B 01 D  53/00

Le présent rapport a été établi pour toutes les revendications

| Lieu de la recherche | Date d'achèvement de la recherche | Examinateur |
|---|---|---|
| LA HAYE | 02-05-1988 | POLESAK, H.F. |

EPO FORM 1503 03.82 (P0402)